# EUROPEAN PATENT SPECIFICATION

(11) **EP 3 680 186 B1**
(45) Date of publication and mention of the grant of the patent: **27.09.2023**
(21) Application number: 19217880.4
(22) Date of filing: 19.12.2019
(51) Int. Cl.: B65B 25/00, B65B 51/02, B65B 59/00, B65B 59/02, B65B 61/20, B65B 61/22, B65B 43/14, B65B 43/16, B65B 43/18

(54) **METHOD AND SYSTEM FOR AUTOMATED PACKAGING OF SHOES**
VERFAHREN UND SYSTEM ZUR AUTOMATISIERTEN VERPACKUNG VON SCHUHEN
PROCÉDÉ ET SYSTÈME DE CONDITIONNEMENT AUTOMATIQUE DE CHAUSSURES

(30) Priority: 21.12.2018 DE 102018222816
(43) Date of publication of application: 15.07.2020
(73) Proprietor: Adidas AG, 91074 Herzogenaurach (DE)
(72) Inventor: BAUER, Ulrich, 91074 Herzogenaurach (DE); STEINDORF, Ulrich, 91074 Herzogenaurach (DE); ALATORRE MERCADO, Raymundo, 91074 Herzogenaurach (DE); NASCIMENTO, Danilo, 91074 Herzogenaurach (DE); KERTH, Volker, 91074 Herzogenaurach (DE); KÖSTER, Claus Dieter, 91074 Herzogenaurach (DE)
(74) Representative: Bardehle Pagenberg Partnerschaft mbB Patentanwälte Rechtsanwälte

(56) References cited:
- US-A- 3 691 724
- US-A1- 2017 210 500
- US-A1- 2018 086 486

## Description

### 1. Technical Field

The present invention relates to automated packaging methods and systems for shoes.

### 2. Technical background

Modern process automatization methods and equipment have successfully been applied to many different aspects of shoe manufacturing. For instance, several highly automated shoe manufacturing concepts have been recently developed by the applicant, as disclosed in DE 10 2013 221018 A1, DE 10 2013 221020 A1 and DE 10 2016 208998 A1.

However, the subsequent packaging of the manufactured shoes into shoe boxes and / or the packaging of filled shoe boxes into larger shipping boxes is still being performed manually to a large extend and only partly automatized. One reason for the lack of automatization is a large variation of different process steps that have to be performed until a shoe or a pair of shoes is packaged into the correct shoe box and is ready for shipment to a desired shipping destination such a retail shop or an individual customer.

Recently, several automatization concepts for packaging of shoes have been suggested. For instance, it is already known in the prior art (e.g. see CN 207,292,510) to use a packaging robot to automatically package shoes into shoe boxes, wherein both, the shoes to be packaged and the shoe boxes that the shoes are packaged in are provided to the robot via motorized conveyor belts.

Document US2018/0086486 A1 relates to shipping package forming apparatuses, systems, e.g. apparatuses and systems that form and aid in forming packages, such as envelopes, around physical items that are being shipped in the packages. The packages are formed from two layers of sheet material.

Moreover, prior art document CN 105,730,760 provides an automatic express packaging device for shoeboxes configured for packaging a single shoebox into a corresponding shipping bag or outer carton and for providing the outer carton with a corresponding shipping label.

Further, prior art document CN 207,482,279 provides automatic packaging equipment for shoe production comprising two essentially colinearly arranged conveyor belts, the first belt providing pairs of shoes to be packaged and the second belt providing the corresponding shoe boxes. A motorized crane gripper then inserts the pair of shoes into the corresponding shoe box.

However, the packaging methods and systems known from the prior art have various deficiencies. For instance, the degree of automatization is still insufficient because several packaging steps such as preparing the correct shoe boxes, still have to be performed manually. Moreover, the packaging systems known from the prior art may not provide sufficient flexibility and / or accuracy for packaging of shoes that differ in certain characteristics such as size, model, color, etc. into the correctly matching shoe boxes. Accordingly, conventional packaging systems are still heavily susceptible to errors, such as an incorrect order and / or spatial arrangement of shoes to be packaged and / or an incorrect order of shoe boxes provided to the packaging section. Such errors usually result in downtime of the packaging system. Moreover, conventional packaging systems have to be reconfigured manually each time a new batch of shoes with new characteristics such as size, model, color, etc. has to be packaged.

In addition, also the known methods and systems for packaging of filled shoe boxes into larger shipping boxes can be optimized. For instance, filled shoe boxes are also still being packaged manually into the corresponding shipping boxes.

It is therefore the problem underlying the present invention to improve automated packaging of shoes so that the above outlined disadvantages of the prior art are at least partly overcome.

### 3. Summary of the Invention

The above-mentioned problem is at least partly solved by the subject matter of the independent claims of the present application. Exemplary embodiments of the invention are described in the depended claims.

In one embodiment, the present invention provides a system for an automatic packaging of shoes, comprising means for determining shoe type information from a shoe or pair of shoes to be packaged, means for automatically packaging the shoe or pair of shoes in a packaging container and means for dynamically controlling the automatic packaging based at least in part on the determined shoe type information.

In essence, the claimed invention therefore provides a system that allows to dynamically control, adjust and / or check the automatic packaging process continuously and in real-time while a batch of shoes is being automatically packaged.

For instance, the shoes to be packaged may be provided to the system in a predetermined or even in a random order. The system may then determine shoe type information from each shoe or each pair of shoes provided to the system for packaging. The various steps of the packaging process can then be dynamically adjusted, controlled and / or checked based on the determined shoe type information. Consequently, the automatic packaging system, for example, does not have to be manually reconfigured each time a new batch of shoes is provided to the system for packaging.

In addition, the system can also operate successfully even if there is a large variability among the shoes of a batch of shoes to be packaged. For instance, the system could be fed by a plurality of different pairs of shoes each customized for a certain customer. The system can then use the determined shoe type information to perform and dynamically adjust the desired packaging steps for each customized pair of shoes.

Moreover, for example, errors that may occur during providing a batch of shoes to the system (e.g. if a predetermined packaging order is accidentally not adhered to) or during processing can easily be corrected by the automatic packaging system without resulting in an interrupt or slow-down of operation and / or without requiring a time-consuming intervention by a human operator.

In some embodiments of the present invention the system for automatic packaging of shoes may further comprise at least one of: means for automatically providing the packaging container for the shoe or pair of shoes corresponding to the determined shoe type information, means for automatically providing the packaging container with a packaging container label corresponding to the determined shoe type information, means for automatically obtaining a packaging container label based on at least part of the determined shoe type information, means for comparing the determined shoe type information with previously stored information about the shoe or pair of shoes to be packaged and means for changing a processing order of the shoe or pair of shoes and / or of the packaging container based at least partially on the determined shoe type information.

In this manner, the packaging of shoes and / or the shipping preparations may be further automatized because the system is enabled to automatically provide a matching packaging container (e.g. a shoe box, a shoe bag, outer carton etc.) and / or the corresponding packaging container label for each shoe or pair of shoes to be packaged corresponding to the determined shoe type information. In addition, the processing order of the shoes to be packaged can dynamically be adjusted such that subsequent processing steps can be performed in an optimize order.

Further, in some embodiments of the present invention the means for determining the shoe type information may comprise at least one of: optical sensor equipment for determining at least part of the shoe type information from an optical label of the shoe or pair of shoes, radio frequency identification (RFID) equipment for determining at least part of the shoe type information from an RFID label of the shoe or pair of shoes, image recognition equipment for determining at least part of the shoe type information from a digital image of the shoe or pair of shoes and means for obtaining at least part of the shoe type information from a database.

Depending on the specific implementation of the present invention the shoe type information can be determined from the shoes to be packaged in different ways using different technologies. For instance, each shoe or pair of shoes may be provided with an RFID label for instance being implemented as a passive RFID tag.

Such RFID label may comprise a RF antenna and a tag chip coupled to the antenna and comprising memory, wherein the memory is configured to store at least part of the shoe type information and / or a reference to a database storing at least part of the shoe type information.

Using RFID technology for determining the shoe type information has the advantage, for example, that the shoe type information can be remotely determined without requiring a line of sight between the label and the RFID reader. Further, RFID labels are cheap, lightweight, easy to handle and reusable. In addition, they may even be integrated into a shoe during or after manufacturing without affecting the appearance and / or wearing comfort of the shoe.

Additionally, or alternatively part of the shoe type information may also be determined via an optical bar code reader or via image recognition equipment. For example, modern machine learning methods (e.g. deep neural networks) may be employed to categorize each shoe or pair of shoes to be packaged and thereby obtain the corresponding shoe type information that is then used to dynamically control the automatic packaging process.

For instance, using image recognition has the advantage that the shoes can directly be fed to the packaging system after manufacturing without any further modifications.

In some embodiments of the present invention the means for automatically providing the packaging container with the packaging container label and the means for automatically obtaining the packaging container label may be integrated into a single apparatus or subsystem. In this manner, the system can be made more compact and easier to relocate and deploy.

Depending on the application and / or on the specific implementation of the present invention various types of shoe type information can be determined by the packaging system.

For instance, the shoe type information may comprise at least one of: a shoe size of the shoe or pair of shoes, a type of shoe model of the shoe or pair of shoes, an article number of the shoe or pair of shoes, a gender information of the of the shoe or pair of shoes, a dimension of the shoe or pair of shoes, a weight of the shoe or pair of shoes, a shipping destination for the shoe or pair of shoes, a material property of the shoe or pair of shoes, a design pattern of the shoe or pair of shoes, an indication of at least one accessory (e.g. shoe laces, cleats etc.) to be packaged together with the shoe or pair of shoes and retail information associated with the shoe or pair of shoes.

By using said shoe type information or various combinations thereof even more aspects of packaging and / or of preparing shoes for shipment can be automatized and / or customized by the automated packaging system.

In some embodiments of the present invention the system for automatic packaging of shoes may further comprise means for automatically wrapping or covering the shoe or pair of shoes with packaging material. For instance, the shoes may be automatically wrapped with packaging paper.

In some embodiments said means for wrapping or covering may be configured to wrap or cover a first shoe inside the packaging container before a second shoe is inserted into the packaging container and to wrap or cover the second shoe after being inserted into the packaging container.

Specifically, only a single sheet of packaging material, preferably a single sheet of packaging paper may be used to wrap or cover both shoes in order to keep the wrapping process as simple and efficient as possible.

Alternatively or additionally, the means for wrapping or covering may also be configured to place a sheet of packaging material, preferably a sheet of packaging paper over at least a part of the packaging container, to place the sheet of packaging material over the first shoe after the first shoe is inserted into the packaging container and to place the sheet of packaging material over the second shoe after the second shoe is inserted into the packaging container.

Further, the means for wrapping or covering may be further configured to draw and cut the sheet of packaging material of a roll of packaging material.

Further, the means for wrapping or covering may also comprise a mechanical gripper, such as a vacuum gripper, configured for gripping and / or drawing a sheet of packaging material, preferably a sheet of packaging paper over the packaging container and / or the shoe or pair of shoes.

For instance, in this manner the intricate task of wrapping both shoes with a single sheet of delicate packaging paper such as silk paper can also be fully automatized. Thereby the speed, efficiency and robustness of the packaging process can be further optimized and the need for time-consuming manual processing can be reduced.

In some embodiments of the present invention the means for automatically providing the packaging container may comprise at least one of: means for automatically assembling the packaging container, means for determining packaging container type information, means for retrieving the packaging container, means for repositioning the packaging container, means for erecting the packaging container, means for applying an adhesive and / or a joining agent to a portion of the packaging container, means for folding at least a portion of the packaging container, means for joining at least two portions of the packaging container and means for inserting at least a portion of the packaging container into a folding mold.

Further, the means for applying the adhesive and / or the joining agent comprise at least one adhesive sprayer configured to apply a liquid adhesive on at least one side portion and / or a lid portion of the packaging container.

In this way, the packaging containers needed for packaging can be directly assembled by the automatic packaging system, for example, from a batch of packaging container blanks. Thereby, the footprint, the efficiency, speed and customizability of the automatic packaging system can be further improved. Moreover, the conventional but time-consuming manual assembly of the packaging containers can be avoided.

In some embodiments, the automatic packaging system may also comprise at least two different folding molds each configured to receive different packaging containers having a different size.

Further, the system for automatic packaging of shoes may also comprises a magazine for storing at least two different types of packaging container blanks. For instance, the different types of packaging container blanks may be configured for different types of shoes to be packaged. For example, the different packaging container blanks may exhibit different characteristics such as a size, a color, a shape, a material type and / or an imprint.

In this manner, the system is enabled to handle and / or assemble more than one different type of packaging container corresponding to the determined shoe type information. In this way the customizability of the automatic packaging process can be further enhanced. For instance, the automatic packaging system may process at least two different batches of shoes each type requiring a different type of packaging container (i.e. batches of different shoe type or different shoe size such as one batch of football boots and another batch of running shoes) simultaneously, e.g. in the sense that one pair of the first batch is processed after another pair of the second batch etc.

In some embodiments of the present invention the means for automatic packaging the shoe or pair of shoes may comprise at least one of: means for obtaining the shoe or pair of shoes, means for obtaining the packaging container, means for repositioning the packaging container, means for opening the packaging container, means for gripping the shoe or pair of shoes, means for repositioning the shoe or pair of shoes, means for placing the shoe or pair of shoes in the corresponding packaging container, means for inserting at least one accessory associated with the shoe or pair of shoes into the packaging container, means for closing and / or sealing the packaging container.

In some embodiments, the means for providing the packaging container and the means for automatic packaging the shoe or pair of shoes may also be integrated into a single processing station or subsystem.

In this way the complexity and / or the footprint of the packaging system can be further reduced and / or the efficiency of the automatic packaging can be further improved.

Further, the automatic packaging system may also comprise means for providing a plurality of shoes to be packaged.

For instance, the shoes to be packaged may be provided by one or more conveyors. In some embodiments, the shoes may be placed on the conveyor belts by a human operator or by a robotic actuator. In other embodiments, the shoes may also be provided in a large container from which a robotic actuator directly obtains the shoes in a random order. Since the shoe type information is determined by the packaging system for each shoe or each pair of shoes it can still be ensured that each pair of shoes is correctly packaged and prepared for shipment.

Specifically, in some embodiments, the means for providing the plurality of shoes may comprise at least one of: means for arranging the pluralities of shoes in a desired order and / or a desired spatial arrangement, preferably as matching pairs; means for providing the plurality of shoes with a machine-readable label, preferably an optical label and / or an RFID label and means for communicating the desired order and / or the desired spatial arrangement to other means of the system.

For example, the shoes may be provided with an RFID label after manufacturing. A human operator or an automatic image recognition system may then assign shoe type information for each shoe or pair of shoes to the corresponding RFID label.

For instance, part of the shoe type information may be directly stored on the RFID label. Alternatively or additionally, part of the shoe type information may also be stored in a database, wherein each database entry comprises at least part of the shoe type information for each shoe or pair of shoes and a unique reference to the corresponding RFID label that is provided for each shoe or pair of shoes. In this way, the system can determine the shoe type information for each shoe or pair of shoes by querying the database using the unique reference obtained by reading the RFID label that is attached to each shoe or pair of shoes.

The RFID label may be directly attached to each shoe or one shoe of each pair of shoes. Alternatively, the RFID label may also be included in a shoe tongue label or a hang tag attached to each shoe of pair of shoes.

The system for automatic packaging of shoes may further comprise at least one of: means for obtaining a plurality of packaging containers, each containing a shoe or a pair of shoes, means for determining packaging container type information associated with at least one packaging container of the plurality of packaging containers, means for automatically providing a shipping container for the least one packaging container corresponding to the determined packaging container type information and / or the determined shoe type information, means for automatically packaging the at least one packaging container in the shipping container corresponding to the determined packaging container type information and / or the determined shoe type information, means for inserting at least one packaging accessory into the shipping container corresponding to the determined packaging container type information and / or the determined shoe type information, means for automatically obtaining a shipping container label corresponding to at least part of the determined packaging container type information and / or the determined shoe type information, means for automatically providing the shipping container with the shipping container label corresponding to at least part of the determined packaging container type information and / or at least part of the determined shoe type information, means for changing a processing order of the shipping container corresponding to at least part of the determined packaging container type information and / or the determined shoe type information, means for closing and sealing the shipping container and means for arranging the shipping container on a shipping pallet corresponding to at least part of the determined packaging container type information and / or the determined shoe type information.

In this manner, not only the automatic packaging of shoes into a corresponding packaging container can be improved but the packaged shoes can also be automatically packaged by the system into a corresponding shipping container. For example, batches of identical or similar shoes (e.g. ten pairs of similar shoes) can automatically be packaged together into one shipping container destined for a particular shipping destination such as a particular retail shop. Moreover, several shipping containers can automatically be arranged for shipment on a corresponding shipping pallet.

In this way, the whole commissioning process for shipping of a batch of shoes to a desired shipping destination can substantially be enhanced because most or even all relevant processing steps can be automatized and dynamically be controlled.

In some embodiments, the means for automatically packaging the packaging containers in the shipping container are configured to insert the at least one packaging container at an angle with respect to a wall of the shipping container.

In this manner, it can be ensured that the packaging containers do not get jammed when being inserted into the shipping container.

Moreover, the means for automatically packaging the at least one packaging container in the shipping container may be configured to handle at least two, preferably at least three, more preferably at least four, even more preferably at least five and most preferably at least six packaging containers simultaneously.

By handling more than one packaging container simultaneously the efficiency, accuracy and / or robustness of the automatic packaging of the shipping containers can further be increased.

In some embodiments of the present invention, the system for automatic packaging of shoes may comprise at least one robotic actuator having at least three, preferably at least four, more preferably at least five and most preferably at least six actuation axes. By using such robotic actuators, the flexibility and accuracy of the system can be greatly improved. In addition, such robotic actuators need significantly less space than conventional technology such as conveyor belts and / or crane grippers for example.

Further, the at least one robotic actuator may comprise a vacuum gripper and / or a particle jamming gripper. Details on using particle jamming devices in footwear manufacture can be found in the German patent application by the Applicant with application serial number 102018212228.8.

By using such grippers instead of conventional handling tools, the robotic actuators are enabled to handle items of complex and / or of varying shape (e.g. shoes, various accessories, unfolded and / or partly folded packaging containers etc.) in a safe and efficient manner.

In some embodiments of the present invention the packaging container label is obtained (e.g. printed) while the corresponding shoe or pair of shoes is being packaged in the packaging container.

In this manner, the labels for the packaging containers do not need to be provided beforehand but can dynamically be printed according to the determined shoe type information relating to the respective shoe or pair of shoes being packaged. Thereby, the packaging process is made more efficient and robust, i.e. the chance of attaching the wrong label to a packaging container is effectively eliminated.

In another embodiment the present invention provides a method for automatic packaging of shoes, comprising the steps of, determining shoe type information from a shoe or pair of shoes to be packaged, automatically packaging the shoe or pair of shoes in a packaging container and dynamically controlling the automatic packaging based at least in part on the determined shoe type information.

Evidently, said method can be modified as needed by all processing steps performed by the system for automatic packaging of shoes described in detail above.

The present invention also provides a computer program for automatic packaging of shoes comprising instructions for controlling the above discussed system for automatic packaging of shoes and for performing the above method for automatic packaging of shoes, when the instructions are executed by computing and control means of an automatic packaging system such as described above.

### 4. Short description of the figures

Aspects of the present invention are described in more detail in the following by reference to the accompanying figures. These figures show:
- **Fig. 1**: a diagram illustrating a system for automated packaging of shoes according to an embodiment of the present invention.
- **Fig. 2**: a diagram illustrating a sub-system of a system for automated packaging of shoes according to an embodiment of the present invention, the subsystem being configured to provide two different types of packaging containers.
- **Fig. 3**: a diagram illustrating a component of the sub-system of Fig. 2 related to a system for automated packaging of shoes according to an embodiment of the present invention.
- **Fig. 4**: a diagram illustrating a robotic actuator as being used by a system for automated packaging of shoes according to an embodiment of the present invention.
- **Fig. 5**: a diagram illustrating a sub-system of a system for automated packaging of shoes according to an embodiment of the present invention, the subsystem being configured to provide a sheet of packaging material for wrapping a pair of shoes inside a packaging container.
- **Fig. 6**: a diagram illustrating the position of an RFID reader being part of a subsystem of a system for automated packaging of shoes according to an embodiment of the present invention.
- **Fig. 7**: a diagram illustrating the position of further RFID readers being part of a further sub-system of a system for automated packaging of shoes according to an embodiment of the present invention.
- **Fig. 8**: a diagram illustrating a further sub-system of a system for automated packaging of shoes according to an embodiment of the present invention, the further sub-system being configured for providing shipping containers and for packaging a plurality of packaging containers filled with shoes into the corresponding shipping containers.

### 5. Detailed description of some exemplary embodiments

In the following, exemplary embodiments of the present invention are described in more detail, with reference to a system for automated packaging of shoes. While specific feature combinations are described in the following with respect to the exemplary embodiments of the present invention, it is to be understood that the disclosure is not limited to such embodiments. In particular, not all features have to be present for realizing the invention, and the embodiments may be modified by combining certain features of one embodiment with one or more features of another embodiment.

Moreover, the packaging systems described below are constructed from a plurality of different processing stations each performing a single or a plurality of specific processing steps. While for reasons of clarity the processing steps are described to be carried out in a specific order (i.e. as a sequence of successive processing steps) it should be appreciated that adhering to such order is not mandatory for realizing the present invention. In other words, some or all of the processing steps performed by the described system may be performed in a different order and / or simultaneously without deviating from the scope of the present invention.

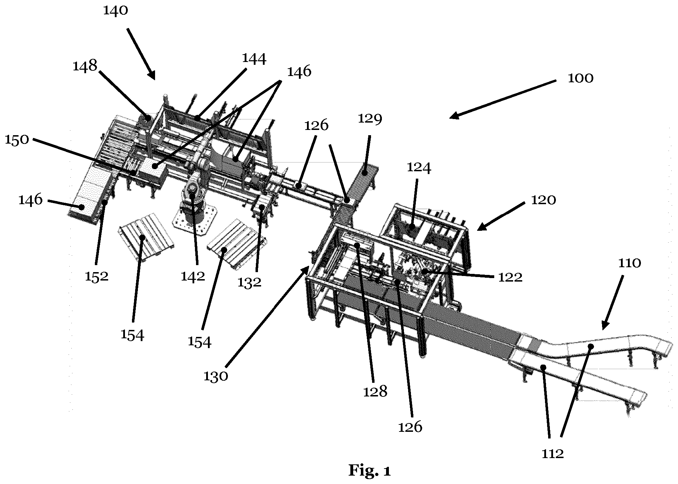

Figure 1 depicts a diagram illustrating a system 100 for automated packaging of shoes according to an embodiment of the present invention. The system comprises a shoe feeding section 110, a shoe packaging section 120 and a shipping container packaging section 140. The shoe feeding section 110 comprises two feed conveyors 112. A human operator or a robotic actuator (not shown) places a batch of shoes to be packaged on the feed conveyors 112. For instance, each batch may only contain shoes of the same model or size. In some embodiments of the present invention the batch size (e.g. number of shoes) may be predetermined to match with the size (e.g. capacity) of a shipping container 146 that is used for shipping the respective batch of shoes to a desired shipping destination. A typical shipping container 146 may for example comprises ten pairs of shoes each packaged into a corresponding packaging container 126.

Upstream of the shoe feeding section 110 the system may further comprise a so-called hang tag station (not shown). There, hang tags are attached to the shoes and an RFID label / tag may also be attached to one or both of the shoes, for instance on the left shoe of each pair of shoes. Then, a human operator assigns shoe type information to the shoes to be processed by the system 100 for example via a HMI (Human Machine Interface).

The assigned shoe type information may comprise information such as a shoe model, an article number, a technical size, a color, an imprint, a gender etc. The batch of shoes may also be assigned according to different processing priorities determined by a production coordinator. In other embodiments, the RFID labels / tags may also be part of the shoe itself (e.g. implemented in the hang tag or in shoe tongue label). Thus, the system may be even automated further such as no operator inputs are needed, and the assignments of shoe type information may also be done automatically.

For instance, such RFID labels may contain electronically stored information. Passive RFID labels collect energy from a nearby RFID reader's interrogating radio waves. Unlike a barcode, the RFID labels need not be within the line of sight of the RFID reader, so it may be directly embedded in the tracked object such as a shoe. The memory of the RFID label may store the product's electronic product code (EPC) and other variable information such as part of shoe type information. In this way, each shoe or pair of shoes can be tracked by RFID readers anywhere in the system. For instance, an RFID reader may be a network connected device (fixed or mobile) with an antenna that sends power as well as data and commands to the RFID labels. The RFID reader effectively acts as an access point for RFID labeled items so that the RFID labels' data can be made available to the automatic packaging system.

Such RFID readers may be positioned at various sections of the packaging system 100, e.g. at certain positions where shoe type information may be required for checking or for controlling the packaging process.

For example, RFID readers may be positioned upstream of the shoe packaging section 120. When a shoe or pair of shoes is transported by one of the conveyors 112 into the vicinity of one of the RFID readers the RFID reader can read the information stored in the memory of the RFID label that is attached to the shoe or pair of shoes. For instance, the RFID reader could read the individual EPC and / or a part of the shoe type information stored in the memory of the RFID label. This information can then be used by the system 100 to control the various packaging steps to be performed by the system 100.

The shoe packaging section 120 may further comprise at least one robotic actuator 122 that is configured for assembling the packaging containers 126 from different packaging container blanks stored in a magazine 124. For each shoe or pair of shoes that is fed to the packaging section 120 the robotic actuator 122 retrieves a packaging container blank from the magazine 124. For instance, the retrieved blank may correspond to the determined shoe type information.

For example, the robotic actuator 122 retrieves a packaging container blank whose size, color, shape, material type and / or imprint corresponds to the shoe type information determined from the shoe or pair of shoes e.g. via an upstream RFID reader or image recognition subsystem of the system 100.

For example, an RFID reader may be positioned at the entry port to the packaging section 120. The RFID reader determines a unique reference (e.g. the EPC) to a database entry storing at least part of the relevant shoe type information such as a shoe size, a shoe model type, etc. Alternatively, the relevant information may also be directly stored in a machine-readable format on the RFID label. In this case, the need for querying a database is omitted. The determined shoe type information can then be used to program and / or to control the operation of the robotic actuator 122 and / or other sub-systems of the packaging section 120. For example, the packaging section 120 may also comprise several other mechanical actuators that perform several steps during assembly and preparation of the packaging container 126 from the corresponding packaging container blank retrieved from the magazine 124.

For instance, the robotic actuator 122 may be equipped with a vacuum gripper to pick up the flat packaging container blanks from the magazine 124. The packaging container blank is then moved to a hot melt station where an adhesive can be applied on its sidewalls. The packaging container blank is further moved to a folding mold where the robotic actuator 122 presses the blank downwards to fold the packaging container into the desired shape. The packaging container is then placed on a further conveyor and a vacuum device (not shown) holds the lid on a lid mold (not shown), additional mechanical actuators then fold the lid into the desired shape.

In some embodiments, the adhesive is applied by adhesive sprayers. The adhesive sprayers may, for example, be stationary, and the packaging container blank is passed underneath so that liquid adhesive can be sprayed onto the sides. The same adhesive sprayers can be used for different types (e.g. sizes) of packaging containers. For instance, one size of packaging container blank may be passed under the adhesive sprayers in one direction then pressed downwards into a first folding mold. For a second size of packaging container, the blank is passed under the sprayers in the opposite direction, and is pressed down into a different folding mold, having a different size and located on the opposite side of the adhesive sprayers.

There may further by adhesive sprayers for the lid of the packaging container 126, positioned in a vertical orientation and configured to spray an adhesive horizontally onto the lid before it is folded down by additional mechanical actuators.

Afterwards the packaging container 126 is moved to the next station of the packaging section 120 where the shoes are placed into the prepared packaging containers 126.

First, a vacuum gripper 128 draws a sheet of packaging paper from a storage area over the open packaging container 126. Then, a second robotic actuator using a vacuum gripper or any other suitable handling tool such as a particle jamming gripper then picks up a first shoe and places it in the prepared packaging container 126, the vacuum gripper 128 then drives back to its home position, thereby covering the first shoe while the remaining piece of paper is laid on the lid of the packaging container 126.

Then, the second robotic actuator picks up the second shoe and places it next to the first shoe into the packaging container 126. The packaging container 126 is then closed and thereby now both shoes are wrapped with the sheet of packaging paper. Afterwards the packaging container 126 now containing the pair of shoes wrapped with packaging paper is moved to the next processing section, e.g. an optional labeling station 130 for labeling the filled packaging containers 126 with a corresponding packaging container label.

At the labeling station 130 an RFID reader reads the RFID label of the shoe or pair of shoes already packaged in the corresponding packaging container 126. At this stage, the RFID label is again used to determine part of the shoe type information (e.g. shoe model, article number, gender, size, color, language spoken at the shipping destination etc.) necessary for obtaining or producing the correct packaging container label for the packaging container 126. Once the required information is determined, the information is send to an automated label printer, then the packaging container 126 moves to the printing station where the automatic printer will print the specific packaging container label, and by using an automatic applicator, attaches the label onto the packaging container 126. Evidently, in other embodiments of the present invention, the printing and / or the attaching of the packaging container label may also be performed prior or simultaneously to placing the shoes into the corresponding packaging container 126.

After the correct packaging container label has been attached to the respective packaging container 126, the packaging container 126 is then driven either to a bypass 129 (for instance when a batch of shoes being processed has less than a certain number of pairs), or to a packaging container buffer 132. The bypass 129 serves the purpose to dynamically modify the processing order of the automatic packaging system 100. For example, if ten pairs of identical shoes should be packaged into one single shipping container 146 by the shipping container packaging section 140 of the system 100, the bypass 129 can be used to temporally remove packaging containers 126 from the processing queue that contain a different type of shoe to ensure that said identical pairs of shoes arrive together at the shipping container packaging section 140.

The packaging container buffer 132 of the shipping container packaging section 140 is configured to store (i.e. buffer) a certain number of filled packaging containers 126 that should be packaged together in a corresponding shipping container 146. For instance, a particular type of shipping container 146 may be configured to hold ten identical or similar packaging containers 126 arranged in two layers or two rows of five packaging containers 126 each.

For example, the buffer 132 may be configured to buffer five packaging containers 126. After the buffer 132 is filled with five packaging containers 126, a further robotic actuator 142 grips the five packaging containers stored in the buffer 132 in a single movement with a vacuum gripper and inserts them together into the corresponding shipping container 146.

For the embodiment illustrated in Fig. 1 the shipping container 146 is assembled directly at the shipping container packaging section 140. For example, the robotic actuator 142 retrieves a shipping container blank from a magazine 144. The blank is then assembled by the robotic actuator 142 and by several additional mechanical actuators (not shown) that perform tasks such as closing and sealing the bottom lid of the shipping container 146, closing and sealing the top lid after the shipping container 146 is filled etc. For example, the robotic actuator 142 using a vacuum gripper picks up a flat shipping container blank from the magazine 144 and places it on another vacuum device (not shown) to hold the shipping container 146 in place. The robotic actuator 142 then moves to grip a side of the shipping container blank and moves backward to erect the shipping container 146. Next, the bottom lid of the shipping container 146 is closed and a movable tape roller (not shown) applies an adhesive tape to seal the bottom lid of the shipping container 146.

Similar to the magazine 124 for the packaging container blanks the magazine 144 for the shipping container blanks can be configured to store more than one type of shipping container blank. In this manner, the flexibility of the packaging process can be further increased because the shipping container packaging section 140 can process (i.e. assemble and fill) different types of shipping containers simultaneously.

For the depicted embodiment, the robotic actuator 142 is equipped with a vacuum gripper and is configured to perform different processing steps such as the retrieving and (partial) erecting of the shipping container blank, retrieving the plurality of filled packaging containers 126 (e.g. five at a time) buffered in the buffer 132, inserting the plurality of filled packaging containers 126 into the corresponding shipping container 146 and arranging of the filled and sealed shipping containers 146 on a corresponding shipping pallet 154.

After the shipping container 146 is filled with the desired amount of packaging containers 126 the shipping container 146 is moved (e.g. by the robotic actuator 142) to the left, where the top lid is closed and sealed by an additional tape roller 148.

Similar to the bypass 129 for the filled packaging containers 126 the shipping container packaging section 140 also comprises a bypass 152 for a plurality of filled shipping containers 146 that are not yet to be arranged on the shipping palettes 154 by the robotic actuator 142.

The shipping container packaging section 140 may also comprise a labelling station (not shown) for the filled shipping containers 146. At the labeling station, for instance, a group of three RFID readers (not shown) scans the filled and sealed shipping container 146 to read the RFID labels of the shoes inside the packaging containers 126 inside the shipping container 146. Since RFID does not require a direct line of sight the enclosing material of the packaging containers 126 and the shipping container 146 does not interfere with the operation of the RFID readers.

At this stage, part of the shoe type information relevant for shipping such as the amount, the type of article, the type of model and the size of the shoes etc. can be determined by the RFID readers of the shipping container packaging section 140. Consequently, an automatic shipping label production process can be triggered. For instance, the determined shoe type information is sent to an automatic label printer (not shown), where a shipping label is printed and attached to the corresponding shipping container 146 by an automatic applicator (not shown). This sub-process might also be skipped according to customer requirements. Finally, the information stored on the RFID labels can be erased again and the filled shipping container 146 is moved to the palletizing station 150.

Succeeding the labeling of the shipping container 146, the shipping container 146 arrives on the palletizing station 150, where the robotic actuator 142 using a vacuum gripper picks up the shipping container 146 and places it on a shipping pallet 154. In doing so, the robotic actuator 142 keeps track on the number of shipping containers 146 being arranged on one shipping pallet 154 in order to place the desired amount (e.g. 22) shipping containers on the same shipping pallet 154 for shipment.

The system of Fig. 1 as well as similar implementations of the present invention can be dynamically controlled in various manners using the determined shoe type information. For instance, the system may be configured as a continuously manually controlled ordering system. A production coordinator assigns the order (i.e. a sequence) in which the packaging of the shoes should be performed. In this configuration, the production coordinator places the shoes to be packaged in a desired order on the conveyors 112 and the system 100 (e.g. by using the RFID scanning mechanism or image recognition) packages the shoes appropriately (e.g. first in the correct packaging containers 126, then into the correct shipping container 146 and on the correct shipping palette 154). In this configuration, the order that shoes are packaged can be constantly changed without risking an interrupt or slowdown of the operation if the system 100.

In other embodiments of the present invention the ordering itself may be implemented by an MES system (Manufacturing Execution System), where the prioritizing of shoes into the desired packaging order is pre-planned. The RFID scanning mechanism is then simply a check that the order of the shoes provided matches the order in the plan. The MES system can take decisions on orders based on AI (Artificial Intelligence) or ever-changing production and priority plans.

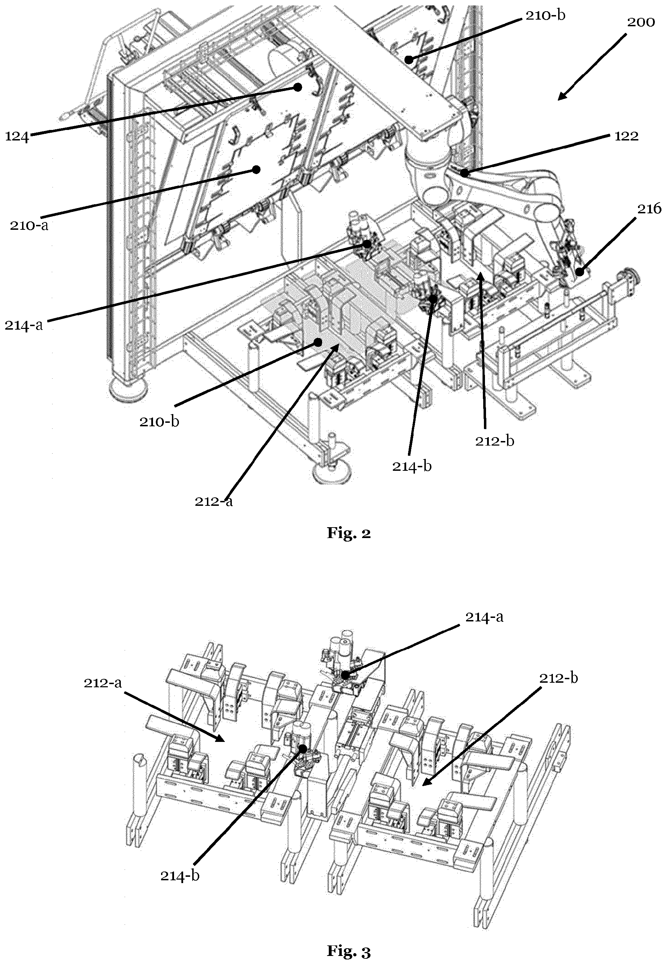

Figure 2 depicts a diagram of a sub-system 200 of the system 100 for automated packaging of shoes described in detail with reference to Fig. 1 above. Said sub-system 200 is part of the shoe packaging section 120 described above and is configured for assembling and providing two different types of packaging containers 126. The packaging containers 126 are assembled from packaging container blanks 210-a and 210-b that may have a different size, material, color, imprint, etc. The packaging container blanks 210 are stored in a magazine 124. In other embodiments of the present invention the magazine 124 may also be configured to store more or less than two different types of packaging containers, e.g. one, three, four, etc.

In the illustrated sub-system of Fig. 2 the sub-system 200 for providing the packaging containers 126 further comprises a robotic actuator 122 being equipped with a vacuum gripper 216. The robotic actuator 122 is configured to grip one of the packaging container blanks 210 stored in the magazine 124 using the vacuum gripper 216 and insert it below the adhesive sprayers 214 applying adhesive to the side panels of the packaging container 126. The packaging container blank 210-b is then moved to one of the two folding molds 212, wherein the size of the left folding mold 212-a is configured to receive a corresponding type of packaging container 210-b and the size of the second folding mold 212-b is configured to receive the other type of packaging container blank 210-a stored in the magazine 124. When the packaging container blank 210 rests above the corresponding folding mold 212, the robotic actuator 122 pushes the packaging container blank 210 downwards in order to fold the packaging container blank 210 into the desired shape of the packaging container 126. The adhesive applied by the adhesive sprayers 214 ensures that the edges of the packaging container blank 210 are joined with each other.

Fig. 3 illustrates a component of the sub-system 200 described with reference to Fig. 2 above. Specifically, Fig. 3 shows the two folding molds 212-a and 212-b each being configured to receive a different type of packaging container blank 210. For instance, the left folding mold 212-a may be configured to receive a different size of packaging container blank 210 than the right folding mold 212-b. For instance, if the sub-system 200 is programed to prepare a packaging container 126 from a first size of packaging container blank 210-b, the robotic actuator 122 grips the blank 210-b from the magazine 124 of Fig. 2 and inserts the blank 210-b on top of the right folding mold 212-b according to its size. The blank 210-b is then moved to the left folding mold 212-a such that the blank 210-b passes below the adhesive sprayers 214 which are configured to apply a certain amount of adhesive, e.g. a line of glue, to the side panels of the packaging container blank 210-b. After the blank 210-b has been moved to the left folding mold 212-a, the robotic actuator 122 of Fig. 2 pushes the blank 210-b downwards and thereby folds the blank 210-b into the desired box-like shape of the packaging container 126.

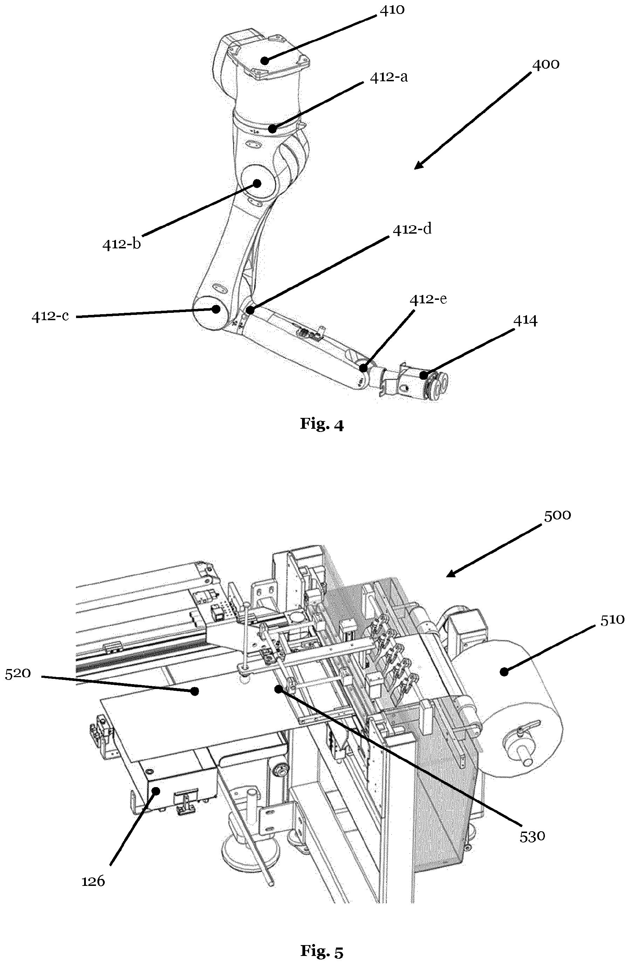

Figure 4 illustrates a robotic actuator 400 similar to the robotic actuator 122 discussed above. The robotic actuator 400 comprises a base plate 410 that can be used to attach the actuator 400 to a support structure. Further, the actuator 400 comprises a pair of vacuum grippers 414 at its tip end. The vacuum grippers 414 enable the robotic actuator 400 to grip various objects of different shapes such as the packaging container blanks 210-b described above, the shoes being packaged into the folded packaging containers 126 and / or the filled packaging containers 126 after the shoes have been inserted and wrapped with packaging paper. Moreover, the actuator 400 comprises several motorized rotation axes 412-a - 412-e that allow the actuator 400 to perform complicated movements in order to translate the objects gripped with the pair of vacuum grippers 414 along arbitrary trajectories that can be programed at will.

Figure 5 shows a further sub-system 500 of the system 100 for automated packaging of shoes according to an embodiment of the present invention. Specifically, the sub-system 500 is being configured to provide a sheet of packaging material 520 for wrapping a pair of shoes (not shown) while being packaged into a corresponding packaging container 126. In one embodiment of the present invention a further vacuum gripper (not shown) draws the sheet of packaging material 520 over the top opening of the packaging container 126 and cuts the sheet of packaging material 520 along a cutting edge 530. The packaging material 520 may be packaging paper stored on a roll 510 at one end of the sub-system 500. A robotic actuator (not shown) that may be similar to the actuator 400 of Fig. 4 above then grips and inserts a first shoe of a pair of shoes into the packaging container 126, thereby pushing down and inserting the sheet of packaging material 520. After the first shoe is inserted the further vacuum gripper moves backwards towards the left (i.e. into the direction of the storage roll 510) and releases the sheet of packaging material 520. Then the second shoe of the pair of shoes to be packaged is inserted into the packaging container 126 next to the first shoe thereby again pressing down the sheet of packaging paper 520. After the second shoe and the sheet of packaging material 520 are fully inserted into the packaging container 126 another actuator (not shown) closes the lid of the packaging container 126 which is then moved to a downstream processing station (e.g. the shipping container packaging section 140) for further processing.

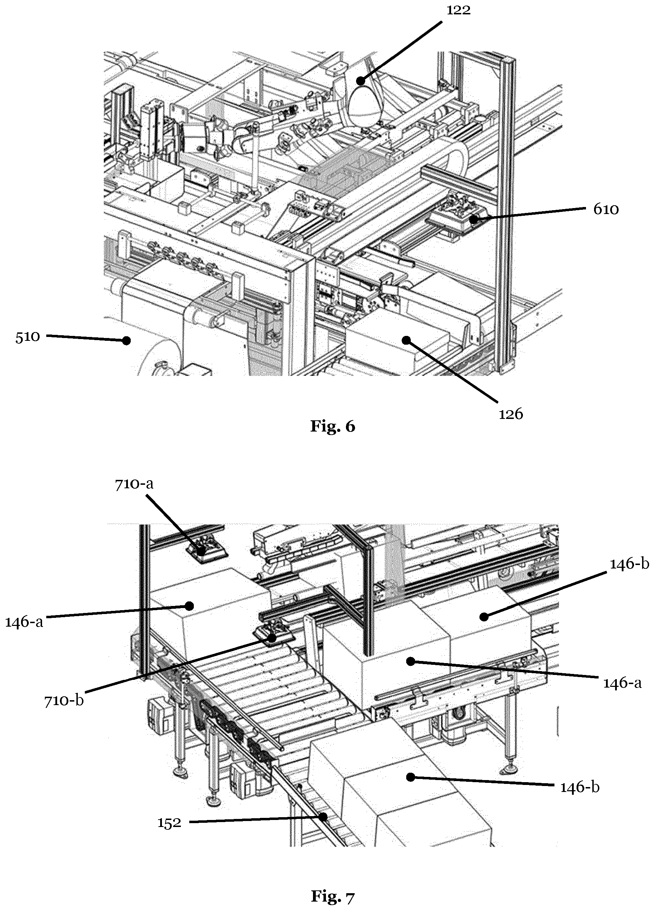

Figure 6 illustrates one possible position of an RFID reader 610 within the system 100 for automated packaging of shoes according to an embodiment of the present invention. The RFID reader 610 is arranged at the exit port of the shoe packaging section 120 of the system 100 and is configured to determine shoe type information of a shoe or pair of shoes packaged into a corresponding packaging container 126. The working principle of how shoe type information can be determined via RFID technology is described in detail above with reference to Fig. 1.

For instance, using the RFID reader 610 at the exit port of the shoe packaging section 120 allows to check whether the correct shoes (e.g. shoes according to a preprogrammed processing order) have been packed into the packaging container 126.

Moreover, the shoe type information determined by the RFID reader 610 may also be used for configuring and / or controlling the subsequent processing steps performed by downstream processing stations such as the shipping container packaging section 140. For instance, if the shipping container packaging section 140 is configured to package different types of packaging containers 126 into different types of shipping containers 146 the determined shoe type information can be used to program the packaging order of the shipping container packaging section 140.

Moreover, if the shoe type information determined by the RFID reader 610 does indicate that the pair of shoes inside the packaging container 126 does not correspond to one of the shipping containers 146 being packaged at the moment by the shipping container packaging section 140 the bypass 129 (see Fig. 1 above) can be used to temporarily remove the packaging container 126 from the processing order of the system 100 for automated packaging of shoes.

Further, it may also happen that due to some error during upstream processing steps the packaging container 126 needs to be permanently removed from the processing order, e.g. if non-matching shoes have been packaged together. In this case, the RFID reader 610 can determine this error and the bypass 129 can be used to remove the erroneous packaging container 126 from the processing order without affecting the efficiency or speed of operation of the system 100 as a whole.

Figure 7 illustrates the position of additional RFID readers 710-a and 710-b being part of another sub-system of the system 100 for automated packaging of shoes according to an embodiment of the present invention. Specifically, the additional RFID readers 710 are installed at the exit port of the shipping container packaging section 140 of the system 100. Similar to the RFID readers 610 installed at the exit port of the shoe packaging section 120, the RFID readers 710 are configured to determine the shoe type information of the shoes or pair of shoes packaged inside their respective packaging containers 126 inside the corresponding shipping container 146-a, 146-b. For instance, the determined shoe type information may be used to check whether the correct number of matching shoes or matching pairs of shoes are packaged into the correct shipping container 146, before the shipping container 146 is further processed.

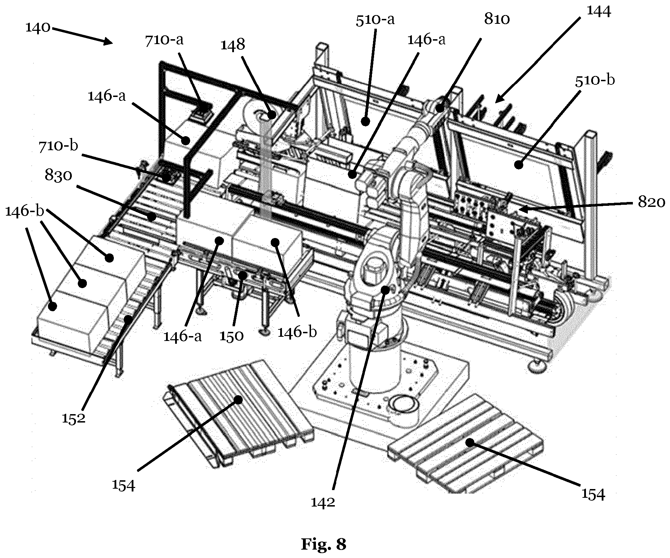

For example, the shipping container packaging section 140 may also comprise an automated label printer (not shown) that prints and attaches a shipping container label onto the respective shipping container 146, wherein the label is printed based on at least a part of the determined shoe type information. For instance, the shipping container label may be provided with information such as the number, type and size of the shoes inside the shipping container 146. Moreover, the determined shoe type information may also be used to control the operation of downstream sub-systems such as the bypass 152 or another robotic actuator (see Fig. 8 below) that is configured for arranging the shipping containers 146 of a corresponding shipping pallet 154 used for shipping a batch of shoes to the desired destination such as a customer or retail shop. Similar to the bypass 129 for the packaging containers 126, the bypass 152 for the shipping containers 146 may be used to temporarily or permanently remove certain shipping containers 146 from the processing order of the shipping container packaging section 140 without significantly affecting the processing efficiency or speed of the system 100.

Figure 8 shows a detailed illustration of the shipping container packaging section 140 during operation. The shipping container packaging section 140 comprises a magazine 144 for storing two different types of shipping container blanks 812-a and 812-b. These shipping container blanks 812-a and 812-b are gripped and removed from the magazine 144 by the robotic actuator 142 being equipped with a vacuum gripper 810 similar to the one described above with reference to Fig. 4. The retrieved shipping container blank 812 is then transported by the robotic actuator 142 to the shipping container folding station 820 comprising several mechanical actuators that together with the robotic actuator 142 fold and join the various panels of the shipping container blank 812 in order to form a folded shipping container 146 that can then be filled with a plurality of filled packaging containers 126 in a similar manner as described in more detail above with reference to Fig. 1.

After the shipping containers 146 are filled with the desired number of corresponding packaging containers 126 the shipping containers 146 are move to the left of the shipping container packaging section 140 and the lids of the shipping containers 146 are closed and sealed by the automated tape roller 148. Then the RFID readers 710 determine the shoe type information of the shoes inside each shipping container 146 as described above with reference to Fig. 7.

The shipping containers 146 are then moved by a conveyor 830 either to the bypass 152 or to the palletizing station 150. The filled and sealed shipping containers 146 can then be gripped again by the vacuum gripper 810 of the robotic actuator 142 and be arranged in a desired order on the shipping pallets 154 that are used for shipping a batch of shoes (i.e. a certain number of filled shipping containers 146) to the desired shipping destination.

## Claims

1. Automatic shoe packaging system (100), comprising:
a. means for determining (610, 710) shoe type information from a shoe or pair of shoes to be packaged;
b. means (120,400) for automatically packaging the shoe or pair of shoes in a shoe box (126); and
c. means for dynamically controlling the automatic packaging of the shoe or pair of shoes in the shoe box based at least in part on the determined shoe type information.

2. System (100) according to the preceding claim, further comprising at least one of:
a. means (122) for automatically providing the shoe box (126) for the shoe or pair of shoes corresponding to the determined shoe type information;
b. means (130) for automatically providing the shoe box (126) with a shoe box label corresponding to the determined shoe type information;
c. means (130) for automatically obtaining the shoe box label based on at least part of the determined shoe type information;
d. means for comparing the determined shoe type information with previously stored information about the shoe or pair of shoes to be packaged; and
e. means (129) for changing a processing order of the shoe or pair of shoes and / or of the shoe box (126) based at least partially on the determined shoe type information.

3. System (100) according to any of the preceding claims, wherein the means for determining (610, 710) the shoe type information comprise at least one of:
a. optical sensor equipment for determining at least part of the shoe type information from an optical label of the shoe or pair of shoes;
b. radio frequency identification, RFID, equipment for determining at least part of the shoe type information from an RFID label of the shoe or pair of shoes;
c. image recognition equipment for determining at least part of the shoe type information from a digital image of the shoe or pair of shoes; and
d. means for obtaining at least part of the shoe type information from a database.

4. System (100) according to the preceding claim,
wherein the RFID labels comprise:
a. a RF antenna; and
b. a tag chip coupled to the RF antenna and comprising memory, wherein the memory is configured to store at least part of the shoe type information and / or a reference to a database storing at least part of the shoe type information.

5. System (100) according to any of the preceding claims, wherein the shoe type information comprises at least one of:
a. a shoe size of the shoe or pair of shoes;
b. a type of shoe model of the shoe or pair of shoes;
c. an article number of the shoe or pair of shoes;
d. a gender information of the of the shoe or pair of shoes;
e. a dimension of the shoe or pair of shoes;
f. a weight of the shoe or pair of shoes;
g. a shipping destination for the shoe or pair of shoes;
h. a material property of the shoe or pair of shoes;
i. a design pattern of the shoe or pair of shoes;
j. an indication of at least one accessory to be packed together with the shoe or pair of shoes; and
k. retail information associated with the shoe or pair of shoes.

6. System (100) according to any of the preceding claims, further comprising means (128) for automatically wrapping or covering the shoe or pair of shoes with packaging material (520).

7. System (100) according to any of the preceding claims 2-6, wherein the means (122) for automatically providing the shoe box (126) comprise at least one of:
a. means for automatically assembling (122, 212) the shoe box (126);
b. means for determining shoe box type information;
c. means for retrieving (122) the shoe box (126);
d. means for repositioning (122) the shoe box (126);
e. means for erecting (210) the shoe box (126);
f. means for applying an adhesive (214) and / or joining agent to a portion of the shoe box;
g. means for folding (210) at least a portion of the packing container (126);
h. means for joining at least two portions of the shoe box (126); and
i. means for inserting (122) at least a portion of the shoe box (126) into a folding mold (212).

8. System (100) according to any of the preceding claims, wherein the means (120) for automatic packaging the shoe or pair of shoes comprise at least one of:
a. means for obtaining the shoe or pair of shoes;
b. means for obtaining (122, 216) the shoe box;
c. means for repositioning (122, 216) the shoe box;
d. means for opening the shoe box;
e. means for gripping (414) the shoe or pair of shoes;
f. means for repositioning (400, 414) the shoe or pair of shoes;
g. means for placing (400, 414) the shoe or pair of shoes in the corresponding shoe box (126);
h. means for inserting at least one accessory associated with the shoe or pair of shoes into the shoe box (126);
i. means for closing and / or sealing the shoe box (126).

9. System (100) according to the preceding claim, wherein the means (110, 112) for providing the plurality of shoes comprise at least one of:
a. means for arranging the pluralities of shoes in a desired order and / or a desired spatial arrangement, preferably as matching pairs;
b. means for providing the plurality of shoes with a machine-readable label, preferably an optical label and / or an RFID label;
c. means for communicating the desired order and / or the desired spatial arrangement to other means of the system.

10. System (100) according to any of the preceding claims, further comprising at least one of:
a. means for obtaining a plurality of shoe boxes (126), each containing a shoe or a pair of shoes;
b. means for determining shoe box type information associated with at least one shoe box of the plurality of shoe boxes;
c. means (142) for automatically providing a shipping container (146) for the least one shoe box (126) corresponding to the determined shoe box type information and / or the determined shoe type information;
d. means (140, 142) for automatically packaging the at least one shoe box (126) in the shipping container (146) corresponding to the determined shoe box type information and / or the determined shoe type information;
e. means for inserting at least one packaging accessory into the shipping container (146) corresponding to the determined shoe box type information and / or the determined shoe type information;
f. means for automatically obtaining a shipping container label corresponding to at least part of the determined shoe box type information and / or the determined shoe type information; and
g. means for automatically providing the shipping container with the shipping container label corresponding to at least part of the determined shoe box type information and / or at least part of the determined shoe type information;
h. means for changing (152) a processing order of the shipping container (146);
i. means for closing (148) and sealing the shipping container (146); and
j. means (142) for automatically arranging the shipping container (146) on a shipping pallet (154).

11. System (100) according to the preceding claim, wherein the means (140, 142) for automatically packaging the at least one shoe box (126) in the shipping container (146) are configured to handle at least two, preferably at least three, more preferably at least four, even more preferably at least five and most preferably at least six shoe boxes (126) simultaneously.

12. System (100) according to any of the preceding claims, further comprising at least one robotic actuator (122, 142, 400) having at least three, preferably at least four, more preferably at least five and most preferably at least six actuation axes (412).

13. System (100) according to the preceding claim, wherein the at least one robotic actuator (122, 142) comprises a vacuum gripper (414) and / or a particle jamming gripper.

14. Method for automatic packaging of shoes, comprising the steps of:
a. determining shoe type information from a shoe or pair of shoes to be packaged;
b. automatically packaging the shoe or pair of shoes in a shoe box (126); and
c. dynamically controlling the automatic packaging of the shoe or pair of shoes in the shoe box based at least in part on the determined shoe type information.

15. Computer program for automatic packaging of shoes comprising: instructions for controlling the system (100) of any of the claims 1 - 13 to perform the method of claim 14, when being executed by computing and control means of an automatic packaging system (100).

## Patentansprüche

1. Automatisches Schuhverpackungssystem (100), umfassend:
a. Mittel zum Bestimmen (610, 710) von Schuhtypinformationen eines zu verpackenden Schuhs oder Schuhpaars;
b. Mittel (120, 400) zum automatischen Verpacken des Schuhs oder Schuhpaars in einer Schuhbox (126); und
c. Mittel zum dynamischen Steuern des automatischen Verpackens des Schuhs oder Schuhpaars in der Schuhbox zumindest teilweise basierend auf den bestimmten Schuhtypinformationen.

2. System (100) nach dem vorhergehenden Anspruch, ferner umfassend mindestens eines von:
a. Mittel (122) zum automatischen Bereitstellen der Schuhbox (126) für den Schuh oder das Schuhpaar entsprechend den bestimmten Schuhtypinformationen;
b. Mittel (130) zum automatischen Bereitstellen der Schuhbox (126) mit einem Schuhboxetikett entsprechend den bestimmten Schuhtypinformationen;
c. Mittel (130) zum automatischen Erhalten des Schuhboxetiketts basierend auf mindestens einem Teil der bestimmten Schuhtypinformationen;
d. Mittel zum Vergleichen der bestimmten Schuhtypinformationen mit zuvor gespeicherten Informationen über den zu verpackenden Schuh oder das Schuhpaar; und
e. Mittel (129) zum Ändern einer Verarbeitungsreihenfolge des Schuhs oder Schuhpaars und/oder der Schuhbox (126) zumindest teilweise basierend auf den bestimmten Schuhtypinformationen.

3. System (100) nach einem der vorhergehenden Ansprüche, wobei die Mittel zum Bestimmen (610, 710) der Schuhtypinformationen mindestens eines von Folgendem umfassen:
a. optische Sensorausrüstung zum Bestimmen mindestens eines Teils der Schuhtypinformationen aus einem optischen Etikett des Schuhs oder Schuhpaars;
b. Funkfrequenzidentifikations-, RFID-, Ausrüstung zum Bestimmen mindestens eines Teils der Schuhtypinformationen aus einem RFID-Etikett des Schuhs oder Schuhpaars;
c. Bilderkennungsausrüstung zum Bestimmen mindestens eines Teils der Schuhtypinformationen aus einem digitalen Bild des Schuhs oder Schuhpaars; und
d. Mittel zum Erhalten mindestens eines Teils der Schuhtypinformationen aus einer Datenbank.

4. System (100) nach dem vorhergehenden Anspruch,
wobei die RFID-Etiketten umfassen:
a. eine HF-Antenne; und
b. einen Tag-Chip, der mit der HF-Antenne gekoppelt ist und einen Speicher umfasst, wobei der Speicher konfiguriert ist, um mindestens einen Teil der Schuhtypinformationen und/oder eine Referenz auf eine Datenbank zu speichern, die mindestens einen Teil der Schuhtypinformationen speichert.

5. System (100) nach einem der vorhergehenden Ansprüche, wobei die Schuhtypinformationen mindestens eines von Folgendem umfassen:
a. eine Schuhgröße des Schuhs oder Schuhpaars;
b. einen Typ des Schuhmodells des Schuhs oder Schuhpaars;
c. eine Artikelnummer des Schuhs oder Schuhpaars;
d. eine Geschlechtsinformation des Schuhs oder Schuhpaars;
e. eine Abmessung des Schuhs oder Schuhpaars;
f. ein Gewicht des Schuhs oder Schuhpaars;
g. ein Versandziel für den Schuh oder das Schuhpaar;
h. eine Materialeigenschaft des Schuhs oder Schuhpaars;
i. ein Designmuster des Schuhs oder Schuhpaars;
j. eine Angabe von mindestens einem Zubehör, das zusammen mit dem Schuh oder Schuhpaar verpackt werden soll; und
k. Einzelhandelsinformationen, die dem Schuh oder Schuhpaar zugeordnet sind.

6. System (100) nach einem der vorhergehenden Ansprüche, ferner umfassend Mittel (128) zum automatischen Umhüllen oder Bedecken des Schuhs oder Schuhpaars mit Verpackungsmaterial (520).

7. System (100) nach einem der vorhergehenden Ansprüche 2-6, wobei die Mittel (122) zum automatischen Bereitstellen der Schuhbox (126) mindestens eines von Folgendem umfassen:
a. Mittel zum automatischen Zusammenbauen (122, 212) der Schuhbox (126);
b. Mittel zum Bestimmen von Schuhboxtypinformationen;
c. Mittel zum Abrufen (122) der Schuhbox (126);
d. Mittel zum Neupositionieren (122) der Schuhbox (126);
e. Mittel zum Aufrichten (210) der Schuhbox (126);
f. Mittel zum Aufbringen eines Klebstoffs (214) und/oder Verbindungsmittels auf einen Abschnitt der Schuhbox;
g. Mittel zum Falten (210) mindestens eines Abschnitts des Verpackungsbehälters (126);
h. Mittel zum Verbinden von mindestens zwei Abschnitten der Schuhbox (126); und
i. Mittel zum Einsetzen (122) mindestens eines Abschnitts der Schuhbox (126) in eine Faltform (212).

8. System (100) nach einem der vorhergehenden Ansprüche, wobei die Mittel (120) zum automatischen Verpacken des Schuhs oder Schuhpaars mindestens eines von Folgendem umfassen:
a. Mittel zum Erhalten des Schuhs oder Schuhpaars;
b. Mittel zum Erhalten (122, 216) der Schuhbox;
c. Mittel zum Neupositionieren (122, 216) der Schuhbox;
d. Mittel zum Öffnen der Schuhbox;
e. Mittel zum Greifen (414) des Schuhs oder Schuhpaars;
f. Mittel zum Neupositionieren (400, 414) des Schuhs oder Schuhpaars;
g. Mittel zum Platzieren (400, 414) des Schuhs oder Schuhpaars in der entsprechenden Schuhbox (126);
h. Mittel zum Einsetzen mindestens eines Zubehörs, das dem Schuh oder Schuhpaar zugeordnet ist, in die Schuhbox (126);
i. Mittel zum Schließen und/oder Abdichten der Schuhbox (126).

9. System (100) nach dem vorhergehenden Anspruch, wobei die Mittel (110, 112) zum Bereitstellen der Mehrzahl von Schuhen mindestens eines von Folgendem umfassen:
a. Mittel zum Anordnen der Mehrzahl von Schuhen in einer gewünschten Reihenfolge und/oder einer gewünschten räumlichen Anordnung, vorzugsweise als übereinstimmende Paare;
b. Mittel zum Bereitstellen der Mehrzahl von Schuhen mit einem maschinenlesbaren Etikett, vorzugsweise einem optischen Etikett und/oder einem RFID-Etikett;
c. Mittel zum Kommunizieren der gewünschten Reihenfolge und/oder der gewünschten räumlichen Anordnung an andere Mittel des Systems.

10. System (100) nach einem der vorhergehenden Ansprüche, ferner umfassend mindestens eines von:
a. Mittel zum Erhalten einer Mehrzahl von Schuhboxen (126), die jeweils einen Schuh oder ein Schuhpaar enthalten;
b. Mittel zum Bestimmen von Schuhboxtypinformationen, die mindestens einer Schuhbox der Mehrzahl von Schuhboxen zugeordnet sind;
c. Mittel (142) zum automatischen Bereitstellen eines Versandbehälters (146) für die mindestens eine Schuhbox (126) entsprechend den bestimmten Schuhboxtypinformationen und/oder den bestimmten Schuhtypinformationen;
d. Mittel (140, 142) zum automatischen Verpacken der mindestens einen Schuhbox (126) in dem Versandbehälter (146) entsprechend den bestimmten Schuhboxtypinformationen und/oder den bestimmten Schuhtypinformationen;
e. Mittel zum Einsetzen mindestens eines Verpackungszubehörs in den Versandbehälter (146) entsprechend den bestimmten Schuhboxtypinformationen und/oder den bestimmten Schuhtypinformationen;
f. Mittel zum automatischen Erhalten eines Versandbehälteretiketts entsprechend mindestens einem Teil der bestimmten Schuhboxtypinformationen und/oder der bestimmten Schuhtypinformationen; und
g. Mittel zum automatischen Bereitstellen des Versandbehälters mit dem Versandbehälteretikett entsprechend mindestens einem Teil der bestimmten Schuhboxtypinformationen und/oder mindestens einem Teil der bestimmten Schuhtypinformationen;
h. Mittel zum Ändern (152) einer Verarbeitungsreihenfolge des Versandbehälters (146);
i. Mittel zum Schließen (148) und Abdichten des Versandbehälters (146); und
j. Mittel (142) zum automatischen Anordnen des Versandbehälters (146) auf einer Versandpalette (154).

11. System (100) nach dem vorhergehenden Anspruch, wobei die Mittel (140, 142) zum automatischen Verpacken der mindestens einen Schuhbox (126) in dem Versandbehälter (146) konfiguriert sind, um mindestens zwei, vorzugsweise mindestens drei, mehr bevorzugt mindestens vier, noch mehr bevorzugt mindestens fünf und am meisten bevorzugt mindestens sechs Schuhboxen (126) gleichzeitig zu handhaben.

12. System (100) nach einem der vorhergehenden Ansprüche, ferner umfassend mindestens einen Roboteraktuator (122, 142, 400) mit mindestens drei, vorzugsweise mindestens vier, mehr bevorzugt mindestens fünf und am meisten bevorzugt mindestens sechs Betätigungsachsen (412).

13. System (100) nach dem vorhergehenden Anspruch, wobei der mindestens eine Roboteraktuator (122, 142) einen Vakuumgreifer (414) und/oder einen Partikelklemmgreifer umfasst.

14. Verfahren zum automatischen Verpacken von Schuhen, umfassend die folgenden Schritte:
a. Bestimmen von Schuhtypinformationen aus einem zu verpackenden Schuh oder Schuhpaar;
b. automatisches Verpacken des Schuhs oder Schuhpaars in einer Schuhbox (126); und
c. dynamisches Steuern des automatischen Verpackens des Schuhs oder Schuhpaars in der Schuhbox zumindest teilweise basierend auf den bestimmten Schuhtypinformationen.

15. Computerprogramm zum automatischen Verpacken von Schuhen umfassend Anweisungen zum Steuern des Systems (100) nach einem der Ansprüche 1 bis 13, um ein Verfahren nach Anspruch 14 durchzuführen, wenn es ausgeführt wird durch Berechnungs- und Steuermittel eines automatischen Verpackungssystems (100).

## Revendications

1. Système d'emballage automatique de chaussures (100), comprenant :
a. des moyens pour déterminer (610, 710) une information de type de chaussure à partir d'une chaussure ou d'une paire de chaussures à emballer ;
b. des moyens (120, 400) pour emballer automatiquement la chaussure ou la paire de chaussures dans une boite à chaussures (126) ; et
c. des moyens pour contrôler dynamiquement l'emballage automatique de la chaussure ou de la paire de chaussures dans la boite à chaussures au moins en partie sur la base de l'information de type de chaussure déterminée.

2. Système (100) selon la revendication précédente, comprenant en outre au moins l'un d'entre :
a. des moyens (122) pour délivrer automatiquement la boite à chaussures (126) pour la chaussure ou la paire de chaussures correspondant à l'information de type de chaussure déterminée ;
b. des moyens (130) pour délivrer automatiquement la boite à chaussures (126) avec une étiquette de boite à chaussures correspondant à l'information de type de chaussure déterminée ;
c. des moyens (130) pour obtenir automatiquement l'étiquette de boite à chaussures au moins en partie sur la base de l'information de type de chaussure déterminée ;
d. des moyens pour comparer l'information de type de chaussure déterminée à une information précédemment stockée relative à la chaussure ou à la paire de chaussures à emballer ; et
e. des moyens (129) pour modifier un ordre de traitement de la chaussure de la paire de chaussures et/ou de la boite à chaussures (126) au moins en partie sur la base de l'information de type de chaussure déterminée.

3. Système (100) selon l'une des revendications précédentes, dans lequel les moyens pour déterminer (617, 710) l'information de type de chaussure comprennent au moins l'un d'entre :
a. un équipement de capteur optique pour déterminer au moins une partie de l'information de type de chaussure à partir d'une étiquette optique de la chaussure ou de la paire de chaussures ;
b. un équipement d'identification radiofréquence, RFID, pour déterminer au moins une partie de l'information de type de chaussure à partir d'une étiquette RFID de la chaussure ou de la paire de chaussures ;
c. un équipement de reconnaissance d'image pour déterminer au moins une partie de l'information de type de chaussure à partir d'une image numérique de la chaussure ou de la paire de chaussures ; et
d. des moyens pour obtenir au moins une partie de l'information de type de chaussure à partir d'une base de données.

4. Système (100) selon la revendication précédente, dans lequel les étiquettes RFID comprennent :
a. une antenne RF ; et
b. une puce d'étiquette couplée à l'antenne RF et comprenant une mémoire, la mémoire étant configurée pour stocker au moins une partie de l'information de type de chaussure et/ou une référence à une base de données stockant au moins une partie de l'information de type de chaussure.

5. Système (100) selon l'une des revendications précédentes, dans lequel l'information de type de chaussure comprend au moins l'un d'entre :
a. une taille de chaussure de la chaussure ou de la paire de chaussures ;
b. un type de modèle de chaussure de la chaussure ou de la paire de chaussures ;
c. un numéro d'article de la chaussure ou de la paire de chaussures ;
d. une information de genre de la chaussure ou de la paire de chaussures ;
e. une dimension de la chaussure ou de la paire de chaussures ;
f. un poids de la chaussure ou de la paire de chaussures ;
g. une destination d'expédition pour la chaussure ou la paire de chaussures ;
h. une propriété de matière de la chaussure ou de la paire de chaussures ;
i. un profil de design de la chaussure ou de la paire de chaussures ;
j. une indication d'au moins un accessoire à emballer en même temps que la chaussure ou la paire de chaussures ; et
k. une information de détaillant associée à la chaussure ou à la paire de chaussures.

6. Système (100) selon l'une des revendications précédentes, comprenant en outre des moyens (128) pour automatiquement emballer ou recouvrir la chaussure ou la paire de chaussures avec un matériau d'emballage (520).

7. Système (100) selon l'une des revendications 2 à 6 précédentes, dans lequel les moyens (122) pour délivrer automatiquement la boite à chaussures (126) comprennent au moins l'un d'entre :
a. des moyens pour assembler automatiquement (122, 212) la boite à chaussures (126) ;
b. des moyens pour déterminer une information de type de boite à chaussures ;
c. des moyens pour récupérer (122) la boite à chaussures (126) ;
d. des moyens pour repositionner (122) la boite à chaussures (126) ;
e. des moyens pour redresser (210) la boite à chaussures (126) ;
f. des moyens pour appliquer un adhésif (214) et/ou un agent d'assemblage sur une partie de la boite à chaussures ;
g. des moyens pour plier (210) au moins une partie du conteneur d'emballage (126) ;
h. des moyens pour assembler au moins deux parties de la boite à chaussures (126) ; et
i. des moyens pour insérer (122) au moins une partie de la boite à chaussures (126) dans un moule de pliage (212).

8. Système (100) selon l'une des revendications précédentes, dans lequel les moyens (120) pour l'emballage automatique de la chaussure ou de la paire de chaussures comprennent au moins l'un d'entre :
a. des moyens pour obtenir la chaussure ou la paire de chaussures ;
b. des moyens pour obtenir (122, 216) la boite à chaussures ;
c. des moyens pour repositionner (122, 216) la boite à chaussures ;
d. des moyens pour ouvrir la boite à chaussures ;
e. des moyens pour saisir (414) la chaussure ou la paire de chaussures ;
f. des moyens pour repositionner (400, 414) la chaussure ou la paire de chaussures ;
g. des moyens pour placer (400, 414) la chaussure ou la paire de chaussures dans la boite à chaussures correspondante (126) ;
h. des moyens pour insérer dans la boite à chaussures (126) au moins un accessoire associé à la chaussure ou à la paire de chaussures ;
i. des moyens pour fermer et/ou sceller la boite à chaussures (126).

9. Système (100) selon la revendication précédente, dans lequel les moyens (110, 112) pour délivrer la pluralité de chaussures comprennent au moins l'un d'entre :
a. des moyens pour agencer la pluralité de chaussures dans un ordre souhaité et/ou un agencement spatial souhaité, de préférence sous forme de paires qui vont ensemble ;
b. des moyens pour délivrer à la pluralité de chaussures une étiquette lisible par machine, de préférence une étiquette optique et/ou une étiquette RFID ;
c. des moyens pour communiquer à d'autres moyens du système l'ordre souhaité et/ou l'agencement spatial souhaité.

10. Système (100) selon l'une des revendications précédentes, comprenant en outre au moins l'un d'entre :
a. des moyens pour obtenir une pluralité de boites à chaussures (126), chacune contenant une chaussure ou une paire de chaussures ;
b. des moyens pour déterminer une information de type de boite à chaussures associée à au moins une boite à chaussures de la pluralité de boites à chaussures ;
c. des moyens (142) pour délivrer automatiquement un conteneur d'expédition (146) pour l'au moins une boite à chaussures (126) correspondant à l'information de type de boite à chaussures déterminée et/ou l'information de type de chaussure déterminée ;
d. des moyens (140, 142) pour emballer automatiquement l'au moins une boite à chaussures (126) dans le conteneur d'expédition (146) correspondant à l'information de type de boite à chaussures déterminée et/ou à l'information de type de chaussure déterminée ;
e. des moyens pour insérer au moins un accessoire d'emballage dans le conteneur d'expédition (146) correspondant à l'information de type de boite à chaussures déterminée et/ou à l'information de type de chaussure déterminée ;
f. des moyens pour obtenir automatiquement une étiquette de conteneur d'expédition correspondant à au moins une partie de l'information de type de boite à chaussures déterminée et/ou à l'information de type de chaussure déterminée ; et
g. des moyens pour délivrer automatiquement au conteneur d'expédition l'étiquette de conteneur d'expédition correspondant à au moins une partie de l'information de type de boite à chaussures déterminée et/ou à au moins une partie de l'information de type de chaussure déterminée ;
h. des moyens pour modifier (152) un ordre de traitement du conteneur d'expédition (146) ;
i. des moyens pour fermer (148) et sceller le conteneur d'expédition (146) ; et
j. des moyens (142) pour disposer automatiquement le conteneur d'expédition (146) sur une palette d'expédition (154).

11. Système (100) selon la revendication précédente, dans lequel les moyens (140, 142) pour emballer automatiquement l'au moins une boite à chaussures (126) dans le conteneur d'expédition (146) sont configurés pour manipuler simultanément au moins deux, de préférence au moins trois, plus préférablement au moins quatre, encore plus préférablement au moins cinq, et le plus préférablement au moins six, boites à chaussure (126).

12. Système (100) selon l'une des revendications précédentes, comprenant au moins un actionneur robotique (122, 142, 400) possédant au moins trois, de préférence au moins quatre, plus préférablement au moins cinq, et le plus préférablement au moins six, axes d'actionnement (412).

13. Système (100) selon la revendication précédente, dans lequel l'au moins un actionneur robotique (122, 142) comprend une préhension à aspiration (414) et/ou une préhension à agrégation de particules.

14. Procédé d'emballage automatique de chaussures, comprenant les étapes suivantes :
a. détermination d'une information de type de chaussure à partir d'une chaussure ou une paire de chaussures à emballer ;
b. emballage automatique de la chaussure ou de la paire de chaussures dans une boite à chaussures (126) ; et
c. contrôle dynamique de l'emballage automatique de la chaussure ou de la paire de chaussures dans la boite à chaussures au moins en partie sur la base de l'information de type de chaussure déterminée.

15. Programme informatique pour l'emballage automatique de chaussures, comprenant : des instructions pour contrôler le système (100) de l'une des revendications 1 à 13 pour mettre en oeuvre le procédé de la revendication 14, lorsqu'elles sont exécutées par des moyens de calcul et de contrôle d'un système d'emballage automatique (100).
